# EUROPÄISCHE PATENTSCHRIFT

(11) **EP 0 702 592 B1**
(45) Veröffentlichungstag und Bekanntmachung des Hinweises auf die Patenterteilung: **25.09.1996**
(21) Anmeldenummer: 94918351.1
(22) Anmeldetag: 20.05.1994
(51) Int. Cl.: B01D 53/86, C10K 1/34, B01J 23/26

(54) **VERFAHREN ZUR ENTFERNUNG VON HCN AUS GASGEMISCHEN UND KATALYSATOR ZUR ZERSETZUNG VON HCN**
METHOD OF REMOVING HCN FROM MIXTURES OF GASES AND A CATALYST FOR DECOMPOSING HCN
PROCEDE PERMETTANT D'ENLEVER L'ACIDE CYANHYDRIQUE DE MELANGES GAZEUX ET CATALYSEUR UTILISE POUR DECOMPOSER L'ACIDE CYANHYDRIQUE

(30) Priorität: 09.06.1993 DE 4319234
(43) Veröffentlichungstag der Anmeldung: 27.03.1996
(73) Patentinhaber: Linde Aktiengesellschaft, D-65189 Wiesbaden (DE); Hüls Aktiengesellschaft, D-45772 Marl (DE)
(72) Erfinder: FÖRG, Wolfgang, D-82057 Icking (DE); RANKE, Gerhard, D-82343 Pöcking (DE); HEISEL, Michael, D-82049 Pullach (DE); MASCHMEYER, Dietrich, D-45772 Marl (DE); WALTER, Robert, D-45721 Haltern (DE)
(74) Vertreter: Kasseckert, Rainer
(86) Internationale Anmeldenummer: EP9401646
(87) Internationale Veröffentlichungsnummer: WO9429004

(56) Entgegenhaltungen:
- EP-A- 0 051 156
- EP-A- 0 171 001
- EP-A- 0 380 184
- DE-C- 448 298
- NL-A- 8 800 525

## Beschreibung

Die Erfindung betrifft ein Verfahren zur Entfernung von HCN aus zumindestens HCN und Schwefelverbindungen enthaltenden Gasgemischen, insbesondere aus durch partielle Oxidation bzw. Vergasung von Kohle oder Öl gewonnenen Gasgemischen, durch katalytische Zersetzung von HCN, wobei das Gasgemisch mit einem Katalysator in Kontakt gebracht wird, der das HCN durch Hydrieren und/oder durch Hydrolyse zersetzt und im Gasgemisch enthaltenes COS zumindest teilweise an diesem Katalysator durch Hydrolyse zersetzt wird, sowie einen Katalysator zur Zersetzung von HCN aus einem Gasgemisch durch Hydrieren und/oder Hydrolyse, wobei der Katalysator zumindest teilweise COS durch Hydrolyse zersetzt.

Zahlreiche Kohlenwasserstoff-haltige Gasgemische, wie etwa die bei der Vergasung von Kohle oder Öl oder anderer Kohlenwasserstoff-haltiger Substanzen gewonnenen Gasgemische, müssen vor ihrer Weiterverarbeitung von Sauergasanteilen wie H₂S befreit werden. Die H₂S-Entfernung wird üblicherweise, insbesondere im Fall niedriger H₂S-Gehalte, durch eine Gaswäsche mit einem chemisch oder physikalisch wirkenden Lösungsmittel durchgeführt. Da im Gasgemisch enthaltenes HCN von den üblicherweise eingesetzten Lösungsmitteln gelöst wird und weil HCN bei der Regenerierung des Lösungsmittels nicht vollständig aus dem Lösungsmittel entfernt wird, kommt es zu einer HCN-Anreicherung im Lösungsmittel, vielfach sogar zu einer Zersetzung des Lösungsmittels durch HCN. Daher wird in an sich bekannter Weise HCN vor der Sauergaswäsche durch katalytische Zersetzung entfernt.

Aus der DE-OS 22 45 859 ist beispielsweise ein Verfahren zur Entfernung von HCN an einem Katalysator, der die Elemente Nickel, Uran und Thorium in Form ihrer Oxide aus einem Gamma-Aluminium-Oxid-Träger enthält, bekannt. Die DE-AS 27 33 105 beschreibt die katalytische Hydrierung von HCN an einem Katalysator, der 10 bis 45 Gew.-% hydrieraktive Metalle der sechsten und/oder achten Nebengruppe des periodischen Systems in Form der Oxide und Sulfide und 90 bis 55 Gew.-% eines Trägers enthält. Die katalytische Hydrierzone wird dort bei einer Temperatur von 100 bis 250°C, vorzugsweise von 150 bis 230°C, betrieben.

Aus der EP-B-0 049 394 ist bekannt, daß die genannten Katalysatoren zwar einerseits die Hydrierung des HCN bewirken, daß andererseits dabei aber unerwünschte Nebenreaktionen ablaufen. So wird durch eine Hydrierung von COS eine beträchtliche Menge Methylmerkaptan gebildet. Gleichzeitig wird COS durch die Thiokonvertierungsreaktion nachgeliefert. Darüber hinaus unterstützen die Katalysatoren die Bildung von Ameisensäure aus HCN. Methylmerkaptan (CH₃SH) und Ameisensäure führen in der Regel zu Störungen der Sauergaswäsche.

Andererseits sind Katalysatoren auf Al₂O₃-Basis als Trägermaterial bekannt, die die gewünschte katalytische Umsetzung des HCN ohne die genannten unerwünschten Nebenreaktionen gewährleisten, allerdings erst ab Temperaturen von ca. 250 bis 300°C. Bei großen Gasmengen, wie sie beispielsweise bei Kohlevergasungen, insbesondere für GuD-Kraftwerke (Gas und Dampfturbinen-Kraftwerke), auftreten, führt eine Anwärmung des Gasgemisches auf Temperaturen von etwa 250 bis 280°C für die HCN-Zersetzung zu enormen Kosten. Gleichzeitig treten hohe Wärme- verluste auf, wenn nicht die Anlage durch entsprechende, sehr teure Maßnahmen ergänzt wird. Im Abgas enthaltene saure Komponenten wie HF und HCl zerstören außerdem auf Al₂O₃-Basis aufgebaute Katalysatoren.

Die EP-A-0 171 001 lehrt ein Verfahren und einen Katalysator zur katalytischen Hydrolyse von COS und/oder CS₂, wobei ein Chromoxid-Aluminiumoxid-Katalysator eingesetzt wird. Es wird auch eine gleichzeitige Hydrolyse von HCN am Katalysator beschrieben. Das Prozeßgas wird mit einer Temperatur von 100 bis 350°C über den Katalysator geleitet.

Aus der EP-A-0 380 184 ist bekannt, HCN und COS in einem Reaktor mit zwei Katalysatorbetten aus einem Gasgemisch zu entfernen. Der erste Katalysator besteht aus Molybden auf Aluminiumoxid und der zweite aus einem Metal der Gruppe Vlb des Periodensystems und einem Alkalimetal. Als Träger für den zweiten Katalysator wirdl ebenfalls Aluminiumoxid genannt. Die Entfernung von HCN und COS erfolgt bei Temperaturen zwischen 150 und 200°C.

Der Erfindung liegt daher die Aufgabe zugrunde, ein Verfahren der eingangs beschriebenen Art und einen Katalysator aufzuzeigen, die gewährleisten, daß die beschriebenen Nachteile bei der HCN-Zersetzung vermieden werden. Insbesondere soll der Katalysator eine HCN-Zersetzung ohne unerwünschte Nebenreaktionen bei möglichst tiefen Temperaturen ermöglichen.

Diese Aufgabe wird erfindungsgemäß dadurch gelöst, daß ein Katalysator verwendet wird, der auf Titanoxid und/oder Zirkonoxid-Basis als Trägermaterial aufgebaut ist.

Erfindungsgemäß wird ein Katalysator verwendet, der auf Titanoxid- und/oder Zirkonoxid-Basis als Trägermaterial aufgebaut ist. Diese Trägermaterialien haben sich als resistent gegen im Abgas enthaltene saure Komponenten wie HF und HCl erwiesen.

Überraschenderweise hat sich gezeigt, daß ein Katalysator für die HCN-Zersetzung, der gleichzeitig eine Hydrolyse von COS unterstützt, die Bildung von Methylmerkaptan durch Hydrieren von COS verhindert.

Da bei Sauergaswäschen, insbesondere mit Aminen als Lösungsmittel, zum einen COS schlecht ausgewaschen wird, zum anderen die Entschwefelung des Gasgemisches aber eine Entfernung von COS erforderlich macht, ist eine COS-Hydrolyse notwendig. Die COS-Hydrolyse wird üblicherweise in einem eigenen Verfahrensschritt durch katalytische Umsetzung des COS an einem Katalysator, der sich vom Katalysator zur HCN-Zersetzung unterscheidet, durchgeführt. Durch die Zersetzung des HCN und die zumindestens teilweise Hydrolyse von COS an demselben Katalysator wird die Verfahrensführung wesentlich vereinfacht. Dabei kann mit besonderem Vorteil sogar eine vollständige COS-Zersetzung erreicht werden, wobei in der Regel wenigstens der überwiegende Teil des COS zersetzt wird.

Überraschenderweise hat sich gezeigt, daß ein Katalysator für die HCN-Zersetzung, der gleichzeitig eine Hydrolyse von COS unterstützt, die Bildung von Methylmerkaptan durch Hydrieren von COS verhindert. Außerdem unterdrückt der Katalysator im erfindungsgemäßen Verfahren die Bildung von Ameisensäure.

Besondere Vorteile sind mit dem erfindungsgemäßen Verfahren zu erzielen, wenn der Katalysator als aktive Komponente Chromoxid enthält. Die erfindungsgemäß eingesetzten Katalysatoren können nach üblichen Techniken hergestellt werden. Zu diesen Techniken zählen beispielsweise die Herstellungen durch trockenes Vermischen, durch Verformen und anschließendes Kalzinieren, durch eine CO-Gelbildung, durch Mischfällung (beispielsweise für einen TiO₂-Cr₂O₃-Katalysator in der DE-AS 24 58 888 beschrieben) oder durch Imprägnieren eines TiO₂- bzw. ZrO₂-Trägers mit einer wässrigen Chromlösung.

Die Verwendung eines derartigen Katalysators bringt den besonderen Vorteil mit sich, daß zum einen HCN durch Hydrieren bzw. Hydrolyse zersetzt wird, gleichzeitig zumindest ein großer Teil des im Gasgemisch enthaltenen COS durch Hydrolyse umgesetzt wird, wobei gleichzeitig die Neubildung von COS aus im Gasgemisch enthaltenem H₂S und CO₂ entsprechend der Thiokonvertierungsreaktion unterdrückt wird.

Als besonders geeignet haben sich Katalysatoren mit einem Gewichtsanteil an Chrom (gerechnet als Cr) zwischen 3 und 15%, vorzugsweise zwischen 4 und 7%, bewährt.

Mit besonderem Vorteil wird die katalytische Zersetzung bei Temperaturen von 130 bis 250°C, vorzugsweise 140 bis 170°C, und bei einem Druck von 1 bis 100 bar, vorzugsweise 20 bis 40 bar, durchgeführt.

Mit Vorteil werden die erfindungsgemäß eingesetzten Katalysatoren reduziert. Die Reduktion kann bereits bei der Katalysatorherstellung oder vor Inbetriebnahme der Anlage bzw. vor dem Einsatz des Katalysators zur katalytischen Zersetzung erfolgen. Die Reduktion wird zwingend bei Temperaturen (z.B. bei ca. 350°C) oberhalb der Betriebstemperatur für die katalytische Zersetzung, die -wie oben beschrieben- unter 250°C, jedoch bevorzugt zwischen 140 und 170°C liegt, durchgeführt. Zur Reduktion können alle bekannten Reduziergase eingesetzt werden, wobei eine Reduktion mit H₂ bevorzugt wird. Bei der Reduktion des Katalysators wird als CrO₃ vorliegendes Chromoxid in Chromoxid in Form von Cr₂O₃ umgewandelt.

Der Katalysator ist erfindungsgemäß zu 70 bis 95%, vorzugsweise 80 bis 95%, auf TiO₂ und/oder ZrO₂ als Trägermaterial aufgebaut. Vorteilhafterweise enthält der Katalysator zwischen 5 und 23%, vorzugsweise zwischen 6 und 10%, Chrom gerechnet als und in Form von Cr₂O₃.

In Weiterbildung der Erfindung wird ein Katalysator eingesetzt, dessen innere Oberfläche, gemessen nach dem BET-Verfahren, 40 bis 80m²/g, vorzugsweise 50 bis 70m²/g, beträgt. Der erfindungsgemäße Katalysator weist mit Vorteil ein Porenvolumen von 0,2 bis 0,35ml/g auf. Ein erfindungsgemäßer Katalysator mit einem Schüttgewicht zwischen 0,8 und 1,5 kg/l erwies sich als besonders geeignet.

Im folgenden wird die Erfindung anhand eines Beispiels näher erläutert:

Ein Rohgasgemisch aus einer Kohlevergasung wurde auf etwa 150°C abgekühlt und einer Wasserwäsche zur Entfernung von Ruß, Metallstaub etc. unterzogen. Von der Wasserwäsche wurde ein mit Wasserdampf gesättigtes Gasgemisch mit einer Temperatur von 120°C und einer Durchflußmenge von 100 kMol/h abgezogen. Das Gasgemisch wurde bei einem Druck von 38 bar auf 140°C angewärmt. Anschließend wurde eine katalytische Umsetzung des HCN und COS durchgeführt, wobei das in die Umsetzung gegebene Gasgemisch folgende Zusammensetzung hatte:

| | |
|---|---|
| H₂ | 32,7 mol-% |
| N₂+Ar | 0,5 mol-% |
| CO | 46,2 mol-% |
| CO₂ | 14,6 mol-% |
| H₂S | 0,43 mol-% |
| COS | 200 ppm |
| HCN | 150 ppm |
| NH₃ | 350 ppm |
| H₂O | 5,5 mol-% |

Im Beispiel wurden die im folgenden näher beschriebenen zwei Katalysatoren mit Cr₂O₃ als aktiver Komponente eingesetzt:

| **Katalysatorbezeichnung** | **L 908/1C** | **L 909/1C** |
|---|---|---|
| Trägermaterial | TiO₂ | ZrO₂ |
| Chromgehalt [% Cr] | 5,2 | 4,8 |
| BET-Oberfläche [m²/g] | 70 | 50 |
| Porenvolumen [ml/g] | 0,30 | 0,23 |
| Schüttgewicht [kg/l] | 1,00 | 1,45 |
| Katalysatorpartikel | Strangpresslinge | Tabletten |
| Durchmesser [mm] | 4 | 4 |
| Länge [mm] | 4-12 | 4 |

Beide Katalysatoren waren vor dem Einsatz in H₂ bei einer Temperatur von 350°C reduziert worden. Die Katalysatorbelastung betrug für beide Katalysatoren jeweils 5000 Nm³/h/m³. Nach der katalytischen Umsetzungsstufe wurde in beiden Fällen ein Gasgemisch abgezogen, das noch 1,5 ppm HCN und 3 ppm COS enthielt. Nach Abkühlung und Wasserkondensation wurde das restliche NH₃ in einer Wasserwäsche ausgewaschen. Anschließend wurden H₂S und CO₂ in einer Aminwäsche aus dem Gasgemisch entfernt.

## Patentansprüche

1. Verfahren zur Entfernung von HCN aus zumindestens HCN und Schwefelverbindungen enthaltenden Gasgemischen, insbesondere aus durch partielle Oxidation bzw. Vergasung von Kohle oder Öl gewonnenen Gasgemischen, durch katalytische Zersetzung von HCN, wobei das Gasgemisch mit einem Katalysator in Kontakt gebracht wird, der das HCN durch Hydrieren und/oder durch Hydrolyse zersetzt und im Gasgemisch enthaltenes COS zumindest teilweise an diesem Katalysator durch Hydrolyse zersetzt wird, **dadurch gekennzeichnet**, daß ein Katalysator verwendet wird, der auf Titanoxid und/oder Zirkonoxid-Basis als Trägermaterial aufgebaut ist.

2. Verfahren nach Anspruch 1 , dadurch gekennzeichnet, daß der Katalysator als aktive Komponente Chromoxid enthält.

3. Verfahren nach Anspruch 2, dadurch gekennzeichnet, daß der Katalysator 3 bis 15 Gew.-%, vorzugsweise 4 bis 7 Gew.-%, Chrom enthält.

4. Verfahren nach einem der Ansprüche 1 bis 3, dadurch gekennzeichnet, daß die katalytische Zersetzung bei Temperaturen von 130 bis 250°C, vorzugsweise 140 bis 170°C, und bei einem Druck von 1 bis 100 bar, vorzugsweise von 20 bis 40 bar, durchgeführt wird.

5. Verfahren nach einem der Ansprüche 1 bis 4, dadurch gekennzeichnet, daß der Katalysator bei der Katalysatorherstellung oder vor dem Einsatz zur katalytischen Zersetzung mit einem reduzierenden Gas, insbesondere mit H₂, reduziert wird.

6. Verfahren nach Anspruch 5, dadurch gekennzeichnet, daß die Reduktion des Katalysators bei Temperaturen durchgeführt wird, die oberhalb der Betriebstemperatur der katalytischen Zersetzung liegen.

7. Verfahren nach einem der Ansprüche 1 bis 6, dadurch gekennzeichnet, daß die katalytische Zersetzung vor einer Gaswäsche zur Entfernung im Gasgemisch enthaltener Sauergase, wie H₂S, durchgeführt wird.

8. Katalysator zur Zersetzung von HCN aus einem Gasgemisch durch Hydrieren und/oder Hydrolyse, wobei der Katalysator zumindest teilweise COS durch Hydrolyse zersetzt, **dadurch gekennzeichnet**, daß der Katalysator zu 70 bis 95 Gew.-%, vorzugsweise zu 80 bis 95 Gew.-%, auf TiO₂ und/oder ZrO₂ als Trägermaterial aufgebaut ist.

9. Katalysator nach Anspruch 8, dadurch gekennzeichnet, daß der Katalysator zwischen 5 und 23 Gew.-%, vorzugsweise zwischen 6 und 10 Gew.-%, Chrom in Form von Cr₂O₃ enthält.

10. Katalysator nach einem der Ansprüche 8 oder 9, dadurch gekennzeichnet, daß die innere Oberfläche des Katalysators, gemessen nach dem BET-Verfahren, 40 bis 80 m²/g, vorzugsweise 50 bis 70 m²/g, beträgt.

11. Katalysator nach einem der Ansprüche 8 bis 10, dadurch gekennzeichnet, daß das Porenvolumen des Katalysators einen Wert zwischen 0,20 und 0,35 ml/g aufweist.

12. Katalysator nach einem der Ansprüche 8 bis 11, dadurch gekennzeichnet, daß das Schüttgewicht des Katalysators zwischen 0,8 und 1,5 kg/l liegt.

## Claims

1. Method of removing HCN from gas mixtures containing at least HCN and sulphur compounds, in particular from gas mixtures obtained by partial oxidation or gasification of coal or oil, by catalytic decomposition of HCN, where the gas mixture is brought into contact with a catalyst which decomposes the HCN by hydrogenation and/or by hydrolysis and COS present in the gas mixture is decomposed at least partially by hydrolysis on this catalyst, characterized in that the catalyst used is based on titanium oxide and/or zirconium oxide as support material.

2. Method according to Claim 1, characterized in that the catalyst contains chromium oxide as active component.

3. Method according to Claim 2, characterized in that the catalyst contains from 3 to 15 % by weight, preferably from 4 to 7 % by weight, of chromium.

4. Method according to any of Claims 1 to 3, characterized in that the catalytic decomposition is carried out at temperatures of from 130 to 250°C, preferably from 140 to 170°C, and at a pressure of from 1 to 100 bar, preferably from 20 to 40 bar.

5. Method according to any of Claims 1 to 4, characterized in that the catalyst is, during preparation of the catalyst or prior to use in the catalytic decomposition, reduced with a reducing gas, in particular with H₂.

6. Method according to Claim 5, characterized in that the reduction of the catalyst is carried out at temperatures which are above the operating temperature of the catalytic decomposition.

7. Method according to any of Claims 1 to 6, characterized in that the catalytic decomposition is carried out prior to gas scrubbing for removing acid gases such as H₂S present in the gas mixture.

8. Catalyst for decomposing HCN from a gas mixture by hydrogenation and/or hydrolysis, where the catalyst at least partially decomposes COS by hydrolysis, characterized in that the catalyst comprises from 70 to 95 % by weight, preferably from 80 to 95 % by weight, of TiO₂ and/or ZrO₂ as support material.

9. Catalyst according to Claim 8, characterized in that the catalyst contains between 5 and 23 % by weight, preferably between 6 and 10 % by weight, of chromium in the form of Cr₂O₃.

10. Catalyst according to Claim 8 or 9, characterized in that the internal surface area of the catalyst measured by the BET method is from 40 to 80 m²/g, preferably from 50 to 70 m²/g.

11. Catalyst according to any of Claims 8 to 10, characterized in that the pore volume of the catalyst is between 0.20 and 0.35 ml/g.

12. Catalyst according to any of Claims 8 to 11, characterized in that the bulk density of the catalyst is between 0.8 and 1.5 kg/l.

## Revendications

1. Procédé permettant d'enlever l'acide cyanhydrique de mélanges gazeux contenant au moins de l'acide cyanhydrique et des composés de soufre, notamment de mélanges gazeux obtenus par oxydation partielle, respectivement par gazéification de charbon ou de pétrole, par décomposition catalytique de l'acide cyanhydrique, le mélange gazeux étant mis en contact avec un catalyseur, qui décompose l'acide cyanhydrique par hydrogénation et/ou par hydrolyse, et une partie au moins de l'oxysulfure de carbone contenu dans le mélange gazeux étant décomposée par hydrolyse sur ledit catalyseur, caractérisé en ce que l'on utilise un catalyseur dont le matériau support est à base d'oxyde de titane et/ou d'oxyde de zirconium.

2. Procédé selon la revendication 1, caractérisé en ce que le catalyseur contient en tant que composant actif de l'oxyde de chrome.

3. Procédé selon la revendication 2, caractérisé en ce que le catalyseur contient de 3 à 15 % en poids, de préférence de 4 à 7 % en poids de chrome.

4. Procédé selon l'une quelconque des revendications 1 à 3, caractérisé en ce que la décomposition catalytique est effectuée à des températures de 130 à 250°C, de préférence de 140 à 170°C et sous une pression de 1 à 100 bar, de préférence de 20 à 40 bar.

5. Procédé selon l'une quelconque des revendications 1 à 4, caractérisé en ce que le catalyseur est réduit à l'aide d'un gaz réducteur, en particulier à l'aide de H₂, lors de la préparation du catalyseur ou avant l'utilisation en vue de la décomposition catalytique.

6. Procédé selon la revendication 5, caractérisé en ce que la réduction du catalyseur est effectuée à des températures qui se situent au-dessus de la température de fonctionnement à laquelle la décomposition catalytique s'opère.

7. Procédé selon l'une quelconque des revendications 1 à 6, caractérisé en ce que la décomposition catalytique est effectuée avant un lavage gazeux en vue de l'élimination des gaz acides contenus dans le mélange gazeux, comme H₂S.

8. Catalyseur en vue de la décomposition de l'acide cyanhydrique en provenance d'un mélange gazeux par hydrogénation et/ou hydrolyse, le catalyseur décomposant au moins une partie de l'oxysulfure de carbone par hydrolyse, caractérisé en ce que le catalyseur est constitué, en tant que matériau support, jusqu'à 70 à 95 % en poids, de préférence jusqu'à 80 à 95 % en poids de TiO₂ et/ou de ZrO₂.

9. Catalyseur selon la revendication 8, caractérisé en ce que le catalyseur contient entre 5 et 23 % en poids, de préférence entre 6 et 10 % en poids de chrome sous la forme de Cr₂O₃.

10. Catalyseur selon l'une quelconque des revendications 8 ou 9, caractérisé en ce que la surface interne du catalyseur, mesurée conformément à la méthode BET, est de 40 à 80 m²/g, de préférence de 50 à 70 m²/g.

11. Catalyseur selon l'une quelconque des revendications 8 à 10, caractérisé en ce que le volume de pores du catalyseur présente une valeur comprise entre 0,20 et 0,35 ml/g.

12. Catalyseur selon l'une quelconque des revendications 8 à 11, caractérisé en ce que la densité en vrac du catalyseur se situe entre 0,8 et 1,5 kg/l.
